**Europäisches Patentamt**

**European Patent Office**

**Office européen des brevets**

(19)

(11) Veröffentlichungsnummer : **0 331 178 B1**

## (12) EUROPÄISCHE PATENTSCHRIFT

(45) Veröffentlichungstag der Patentschrift :
**08.07.92 Patentblatt 92/28**

(51) Int. Cl.⁵ : **B23B 39/00**

(21) Anmeldenummer : **89103681.6**

(22) Anmeldetag : **02.03.89**

(54) **Kompaktaufbau einer Säulenbohrmaschine.**

(30) Priorität : **02.03.88 DE 3806781**

(43) Veröffentlichungstag der Anmeldung :
**06.09.89 Patentblatt 89/36**

(45) Bekanntmachung des Hinweises auf die
Patenterteilung :
**08.07.92 Patentblatt 92/28**

(84) Benannte Vertragsstaaten :
**DE ES FR GB IT SE**

(56) Entgegenhaltungen :
**DD-A- 48 138**
**DE-A- 1 926 411**
**DE-A- 2 708 049**
**DE-A- 3 017 964**
**DE-A- 3 236 808**
**DE-B- 2 525 364**
**US-A- 1 536 730**
**US-A- 3 702 740**

(73) Patentinhaber : **ALZMETALL**
**WERKZEUGMASCHINENFABRIK UND**
**GIESSEREI FRIEDRICH GMBH & CO.**
**Steiner Strasse 2-8**
**W-8226 Altenmarkt/Alz (DE)**

(72) Erfinder : **Schnell, Burkhard K., Dipl.-Ing.**
**Fritz-Bechtold-Strasse 6**
**W-8223 Trostberg (DE)**
Erfinder : **Probst, Ludwig, Dipl.-Ing. (FH)**
**Zwieselstrasse 17a**
**W-8220 Traunstein (DE)**

(74) Vertreter : **Pfenning, Meinig & Partner**
**Mozartstrasse 17**
**W-8000 München 2 (DE)**

## Beschreibung

Die Erfindung bezieht sich auf Saülen bohrmaschinengestütztes Bohrzentrum, bestehend aus einem Maschinenkopf, der das Schaltgetriebe mit stufenlosem Riemenstelltrieb und Hauptantriebsmotor, die Pinole mit der Bohrspindel und einen Vorschubantrieb für die Pinole aufnimmt, bestehend weiterhin aus einer Maschinensäule, die einen entlang dieser mittels einer Zahnstange höhenverstellbaren Tisch trägt, sowie aus einem die Maschinensäule abstützenden Maschinenfuß, wobei an der Maschinen Säule ein als Führungsschlitten ausgebildetes Schwenkzwischenstück drehbar montiert ist und auf das Schwenkzwischenstück der Maschinenkopf gleitend montiert ist. DE-A-32 36 808 zeigt eine solche Maschine.

Derartige Säulenbohrmaschinen gehören zum allgemeinen Stand der Technik. Die bekannten Säulenbohrmaschinen kennzeichnen sich dadurch, daß der fest auf der Säule montierte Maschinenkopf zwar eine senkrechte Bewegung des Werkzeuges mittels der ausfahrbaren Pinole ermöglicht, jedoch keine Bewegung desselben in waagerechter Richtung, also beispielsweise radial zur Maschinensäule. Auch die Bohrtische bekannter Säulenbohrmaschinen sind entlang der Maschinensäule höhenverstellbar gelagert und häufig auch in ihrer Säulenhalterung drehbar. Werkzeugmagazine und zugehörige Werkzeugwechsler sind als integraler Bestandteil auch bei modernen Hochleistungs-Säulenbohrmaschinen nicht bekannt.

Demgegenüber bilden die sogenannten Radialbohr maschinen eine andere Kategorie von Werkzeugmaschinen für die spanabhebende Werkstückbearbeitung. Bei Radialbohrmaschinen ist ein Ausleger vorgesehen, über welchen der Maschinenkopf in radialer Richtung zur Maschinensäule verstellt werden kann. Eine bekannte Radialbohrmaschine mit rollendem Ausleger (DE-AS 2044099) weist einen Maschinentisch auf, mit dem ein Sockel verbunden ist, wobei auf dem Maschinentisch eine durch einen Balg abgedeckte Säule höhenverschieblich gelagert wird. Die Säule trägt einen um ihre vertikale Achse verschwenkbaren Rollenkasten, indem der Ausleger verschieblich gehalten ist, der seinerseits an seinem freien Ende den Spindelkasten, also den Maschinenkopf aufnimmt. Der Ausleger ist durch den Rollenkasten hindurchgeführt und der Sockel der Radialbohrmaschine ist integraler Bestandteil des festmontierten Maschinentisches mit definiert vorgegebener Arbeitshöhe. Den Vorteil eines höhenverstellbaren Bohrtisches bietet die bekannte Radialbohrmaschine nicht. Sie bringt demgegenüber eine oft wünschenswerte einfache radiale Verstellbarkeit, des das Werkzeug tragenden Maschinenkopfes. Hierbei ist allerdings von Nachteil, daß der hierfür verantwortliche Ausleger durch die Maschinensäule bzw. den Rollenkasten hindurchgeführt ist, was die Statik des Radialmaschinenaufbaus zwangsläufig schwächt.

Neben diesen bekannten Radialbohrmaschinen mit rollendem Ausleger, bei denen der den Spindelkasten tragende Ausleger in einem auf einer höhenverstellbaren hohlen Säule verdrehbar gelagerten und gegen die Säule feststellbaren Rollenkasten verschieblich geführt sind, sind auch noch Handhabungsgeräte nach dem Schwenkarmprinzip bekannt, so beispielsweise ein Industrieroboter, der durch Gelenkarme mit 2 Drehpunkten einen ähnlichen Verfahrbereich wie eine Readialbohrmaschine erreicht, ohne eine in Längsrichtung verschiebliche Einheit wie z.B. den Rollenkasten zu benötigen, wobei es von Nachteil ist, daß keiner der beiden Schwenkarmdrehpunkte über der Säule liegt, so daß der Arbeitsbereich nicht kreisförmig um die Säule ausgenutzt werden kann, sondern auf den vor der Säule liegenden Raum beschränkt ist. Die Steifigkeit dieser Gelenkkonsturktion in dieser bekannten Ausführungsform ist für Handhabungsgeräte ausreichend, für eine Hochleistungsbohrmaschine jedoch nicht. Aus diesem Grund können diese Maschinen auch nur Bohrarbeiten mit sehr kleinen Bohrern und kleinen Kräften im Vergleich zur Größe dieses Handhabungsgerätes ausführen.

Neben diesen beiden Prinzipien, der Radialbohrmaschine einerseits und dem Schwenkarmhandhabungsgerät andererseits ist es zumindest bei Fräsmaschinen auch noch bekannt, hinter einer solchen Maschine Werkzeugmagazine mit zugehörigen Werkzeugwechslern so anzuordnen, daß das Werkzeug von dem Magazin an die Bedienungsseite der Fräsmaschine transportiert werden kann (DE-OS 3608225). Das Werkzeugmagazin ist bei dieser Fräsmaschine an der dem Ausleger gegenüberliegenden Seite des Ständers angeordnet und der Ständer weist einen Durchbruch auf, zum Durchführen der Werkzeuge vom Werkzeugmagazin zu dem Werkzeugwechsler.

Werkzeugmagazin und Werkzeugwechsler sind der bekannten Fräsmaschine zwar definiert zugeordnet, sie stellen andererseits jedoch getrennte Einheiten dar, die für sich nicht direkt an der Fräsmaschine montiert sind.

Der vorliegenden Erfindung liegt die Aufgabe zugrunde, Säulenbohrmaschinen gestützte Bohrzentren der gattungsgemäßen Art so weiter zu entwickeln und auszubilden, daß sie bei Beibehaltung ihres relativ einfachen konstruktiven Aufbaus auch Vorteile von Handhabungsgeräten oder anderer, nicht der Kategorie der Säulenbohrmaschinen zuzurechnender Werkzeugmaschinen aufweisen, wie die einfache radiale Verstellbarkeit des im Maschinenkopf senkrecht verschiebbar gelagerten Werkzeuges, die Verschwenkbarkeit des Maschinenkopfes und falls gewünscht auch die automatische Auswechslung von Werkzeugen innerhalb eines vollgekapselten Arbeitsraumes bei gleichzeitiger Aufrechterhaltung der den Säulenbohrmaschinen eigenen Vorteile, wie

2

der Höhenverstellbarkeit des Bohrtisches.

Diese Aufgabe wird erfindungsgemäß durch die im Kennzeichen des Patentanspruchs 1 angegebenen Merkmale gelöst.

Eine zweite Lösungsvariante ist durch den unabhängigen Anspruch 8 gekennzeichnet.

Vorteilhafte Weiterbildungen und Ausgestaltungen der Aufgabenlösung ergeben sich aus den Unteransprüchen.

Dadurch, daß auf dem oberen stirnseitigen Ende der Maschinensäule ein als Führungsschlitten ausgebildetes Schwenkzwischenstück drehgelagert montiert ist, oder in Form einer Doppelgelenkanordnung, ist für Säulenbohrmaschinen der hier angesprochenen Art die bisher starre Zuordnung der Werkzeughalterung zum Säulenabstand aufgehoben, so daß sich die Säulenbohrmaschine praktisch wie eine Radialbohrmaschine handhaben läßt. Hierfür ist jedoch der Ausleger nicht wie bei üblichen Radialbohrmaschinen mit rollendem Ausleger, in einem Rollenkasten gelagert und damit durch diesen hindurchgeführt, der sich seinerseits letztlich auf einem Sockel neben einem Maschinentisch abstützt, sondern vielmehr auf einem besonders ausgebildeten Schwenkzwischenstück. In besonders vorteilhafter Weise bildet das Schwenkzwischenstück einen Führungsschlitten für den Maschinenkopf der linear in einer horizontalen Ebene, etwa vergleichbar mit einem Schienenfahrzeug, radial zur Maschinensäule verfahren werden kann. Da der Führungsschlitten in dem oberen stirnseitigen Ende der Maschinensäule bzw. an diesem Ende drehgelagert ist, ist neben der Linearbewegung des Maschinenkopfes entlang des Führungsschlittens auch noch eine Schwenkbewegung desselben auf gleichermaßen einfache Weise möglich, so daß sich das Werkzeug innerhalb der Pinole nicht nur vertikal, sondern über die genannte Radialbewegung im Führungsschlitten und die Schwenkbewegung des Zwischenstückes beliebig innerhalb jeder einstellbaren horizontalen Ebene verschieben läßt.

Alternativ zur vorstehend beschriebenen Lösung ist der Vorteil auch durch die Doppelgelenkanordnung zu erreichen. Ein zusätzlicher Vorteil der Doppelgelenkanordnung besteht darin, daß der Bohrkopf nur durch Drehbewegungen in zwei Freiheitsgraden bewegt werden kann, während bei der vorgeschriebenen Lösung die beiden Freiheitsgrade durch eine Drehbewegung und eine Verschiebebewegung ermöglicht werden. Drehbewegungen sind kostengünstiger zu realisieren als Verschiebebewegungen. Ein Nachteil dieser zweiten Alternative besteht jedoch darin, daß sich der Bohrkopf selbst bei diesen Bewegungen verdreht. Eine negative Auswirkung auf das sich drehende Werkzeug ergibt sich dadurch jedoch nicht.

In vorteilhafter Weise und alternativ läßt sich jeder der für die drei Koordinaten im karthesischen Koordinatensystem zuständigen Bewegungsabläufe unabhängig voneinander manuell oder mittels Motorbetätigung ausführen.

Die Schlittenführung des Bohrkopfes, die beispielsweise mittels Wälzschmalführungen technsich problemlos und besonders zuverlässig gelöst werden kann, ermöglicht bei relativ großer Radialauslenkung eine hohe Steifigkeit des Maschinenaufbaus bei großem Flächenträgheitsmoment. Derart günstige statische Bedingungen können bei der für Radialbohrmaschinen bekannten geschlossenen Führung des Auslegers nicht erreicht werden. Die aufgesetzte offene Bauweise des Maschinenkopfes auf ein als Führungsschlitten ausgebildetes Schwenkzwischenstück, bildet daher den wesentlichen Kern der Erfindung, was für den genannten nebengeordneten weiteren Lösungsweg entsprechend für die Doppelgelenkführung gilt.

Damit werden in einer Säulenbohrmaschine mit höhenverstellbarem Bohrtisch, die Vorteile einer Radialbohrmaschine mit starrem Arbeitstisch vereinigt zu einem säulenbohrmaschinengestützten Bohrzentrum, wobei in besonders vorteilhafter Weise noch eine Vollschutzverkleidung, und zwar ausschließlich des Arbeitsraumes der Säulenbohrmaschine hinzukommt, die auf der Tischseite als Späne- und Kühlmittelverkleidung ausgebildet ist und auf der Rückseite der Maschine als Gitterschutz. In diesem rückseitigen Bereich ist bei optimierter Raumgestaltung in radialer Anordnung um die Maschinensäule ein Werkzeugmagazin mit entsprechendem Werkzeugwechsler vorgesehen, falls gewünscht, als integraler Bestandteil der Säulenbohrmaschine ausgebildet.

In vorteilhafter Weiterbildung einer derartigen Kompaktbauweise kann neben bzw. zusätzlich zu dem Werkzeugwechsler mit Werkzeugmagazin, ein Werkstückmagazin mit entsprechendem Werkstückwechsler gleichfalls in radialer Anordnung um die und im dichten Abstand zu der Maschinensäule, vorgesehen werden. Alternativ zum Werkstückwechsler kann auch ein Doppelbohrtisch vorgesehen werden, der es ermöglicht, die Maschine auf der einen Seite einer Schutztrennwand automatisch ein Werkstück abarbeiten zu lassen, während auf der anderen Seite der Schutztrennwand ein neues Werkstück von der Bedienungsperson aufgespannt wird.

Der verbleibende Raum unterhalb des oder der Magazine, hinter dem Bohrtisch und oberhalb des Maschinenfusses, kann als Schrank verkleidet sein und der Aufnahme der Elektrik und/oder Elektronik aber auch gegebenenfalls der erforderlichen Hydraulik dienen. Dadurch , daß alle Funktionsabläufe der Maschine im wesentlichen innerhalb einer definierten Kreisfläche ablaufen, also sowohl die eigentlichen Bohrvorgänge als auch der Werkzeugwechsel und gegebenenfalls der Werkstückwechsel, ergibt sich für die Säulenbohrmaschine und ihre Vollschutzkapslung auch von der Standfläche her gesehen ein minimaler Bedarf. Hieran ändert sich auch nichts, wenn anstelle eines Arbeitstisches beispielsweise eine Doppeltischanordnung vorgesehen wird, wobei derartige Tandem-Tischanordnungen an sich bekannt sind und den wesentlichen Vorteil des Wegfalls von Stillstandszeiten bieten.

Anhand der beiliegenden Zeichnungen, die nur eine beispielsweise Ausführungsform eines erfindungsgemäßen säulenbohrmaschinengestützten Bohrzentrums wiedergeben, soll die Erfindung näher erläutert werden.

Es zeigen:

Fig. 1 Einen Aufriß der Säulenbohrmaschine,

Fig. 2 eine frontseitige Draufsicht auf die Säulenbohrmaschine nach Fig. 1 mit der Arbeitsraumverkleidung,

Fig. 3 einen waagerechten Schnitt durch die Darstellung gemäß Fig. 1 in Höhe des Werkzeugmagazines und

Fig. 4 die Draufsicht auf ein mit einem Werkzeugspeicher kombiniertes Werkzeugmagazin.

Fig. 5 die Draufsicht ohne Maschinenkopf auf eine Variante mit Doppeltisch und runder Verkleidung

Fig. 6 die Teilansicht für eine alternative Schwenkarmlösung mit Doppelgelenkführung

Fig. 7 die Teildraufsicht für die Ausführungsform nach Fig. 6

Fig. 8 eine weitere Ausführungsform eines Bohrtisches

Fig. 9 die Darstellung einer Klemmvorrichtung

Fig. 10 Orientierung der Hauptspindel

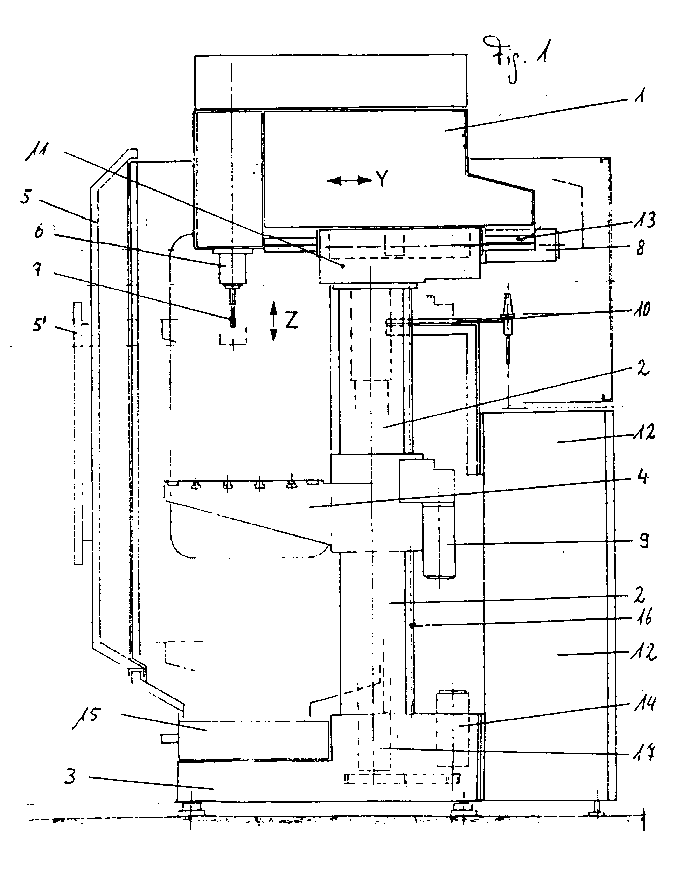

Wie aus Fig. 1 ersichtlich, besteht die Säulenbohrmaschine zunächst,in an sich bekannter Weise, aus dem Maschinenkopf 1 der Maschinensäule 2 und dem die Maschinensäule und den Maschinenkopf tragenden Maschinenfuß 3. Der Bohrtisch 4, der in seiner Fläche den Arbeitssektor vorgibt, ist entlang der Maschinensäule 2 über eine Zahnstange 16 in vorgebbaren Rastermaßen höhenverstellbar, wobei diese Höhenverstellung wahlweise sowohl manuell als auch über einen Hubmotor 9 automatisch erfolgen kann.

Innerhalb des Maschinenkopfes 1 sind, in bekannter Weise, der Haupantriebsmotor für die Spindel, das stufenlose Getriebe mit zugehörigem Schaltgetriebe wie schließlich auch die Pinole 6 mit der Bohrspindel für die Aufnahme des Werkzeuges 7 untergebracht.

Der Maschinenkopf 1 ist auf ein Schwenkzwischenstück 11 aufgesetzt und hierbei in dessen oberer Führungsfläche, die als Führungsschlitten ausgebildet ist, gelagert. Damit ist eine lineare Verschiebung des Maschinenkopfes 1 innerhalb der Lagerung, hier vorteilhaft als Flachwälzführung 13 ausgebildet, in Richtung des Doppelpfeils Y gegenüber dem Schwenkzwischenstück 11 und damit der Maschinensäule 2 möglich.

In einer anderen Auführungsform ist der Maschinenkopf 1 an einem Schwenkarm 30 über ein gableförmiges Gelenk 31 drehbar befestigt. Damit wird ein zusätzlicher Schwenkvorgang zu dem im folgenden beschriebenen Schwenkvorgang des Schwenkzwischenstücks 11 bzw. 30 ermöglicht. Diese beiden Schwenkvorgänge zusammen lassen die Überstreichung einer um die Säule 2 liegenden FLäche zu. Diese Ausführungsform bedient sich also eines Doppelgelenk-Knickarms der über das Schwenkzwischenstück aus oberen stirnseitigen Ende der Säule drehgelagert ist, wobei das Verbindunggelenk zwischen Maschinenkopf und Schwenkzwischenstück nicht durch ein Aufeinandersetzen der beiden Komponenten erzeugt wird, sondern durch eine das Flächenträgheitsmoment und somit die Biegesteifigkeit der Verbindung wesentlich erhöhenden gabelförmigen Gelenkansatz in der Fugestelle.

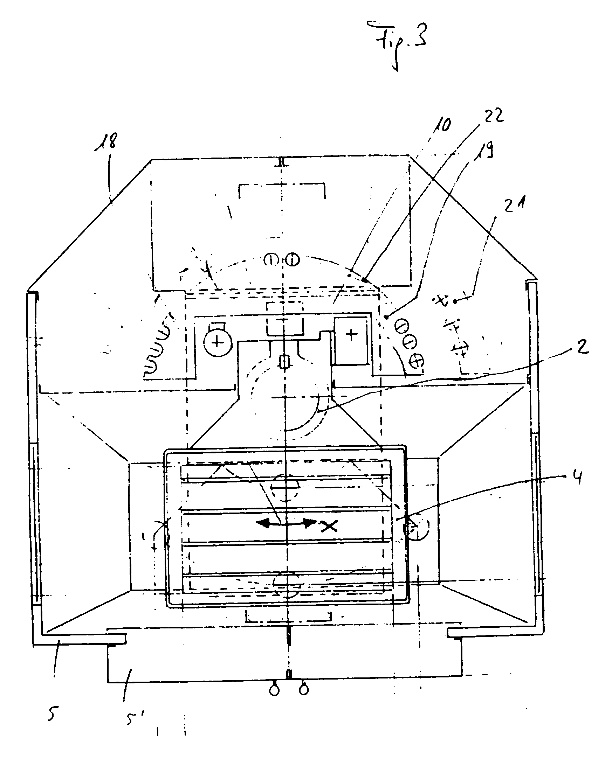

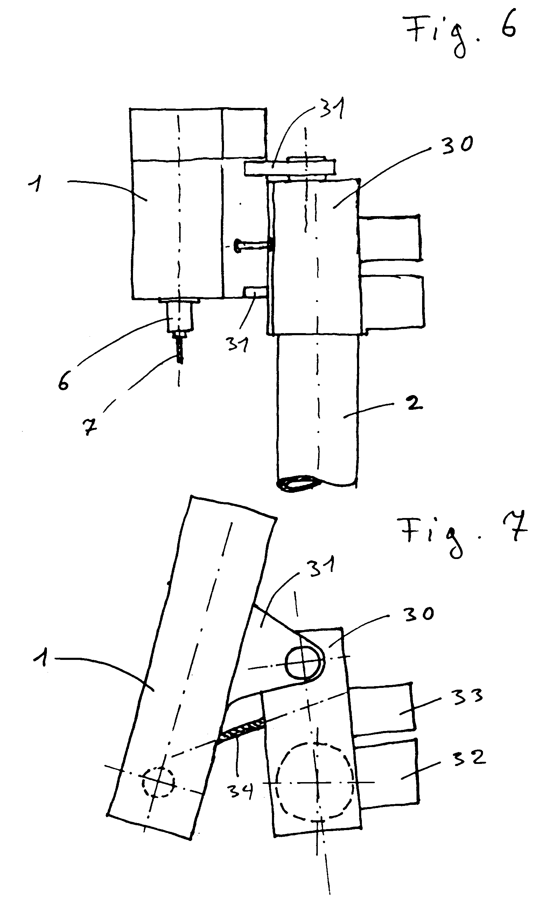

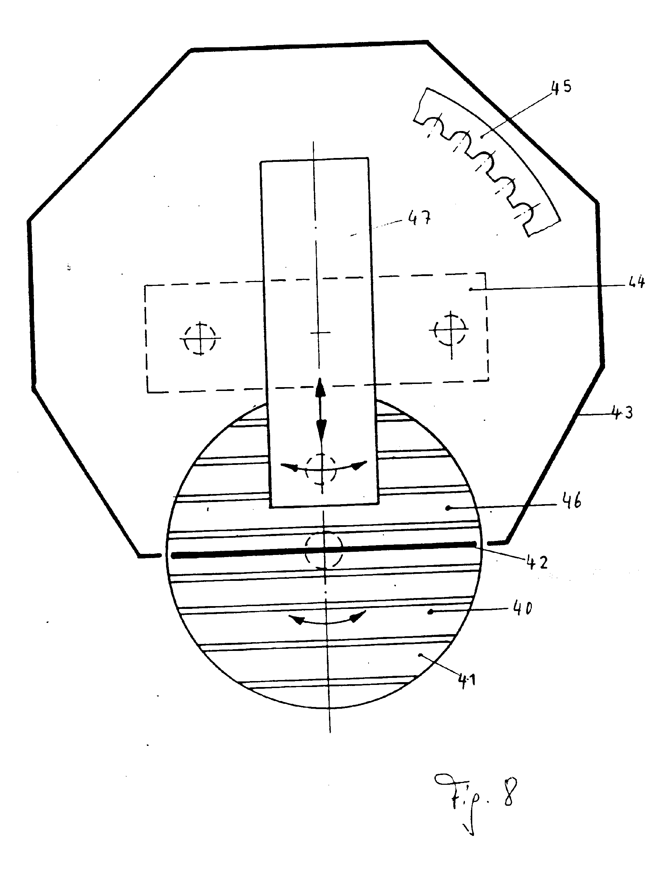

Neben der schlittenförmigen Linearführung bzw. der Drehführung mittels der Doppelgelenkanordnung des Maschinenkopfes 1 auf dem Schwenkzwischenstück 11 bzw. 30 ist das Schwenkzwischenstück auf die obere Stirnseite der Maschinensäule 2 derart aufgesetzt und innerhalb dieser gelagert, daß ein Verschwenken des Kopfes in Richtung des Doppelpfeiles X (siehe Fig. 3) gleichermaßen möglich wird. Damit kann das Werkzeug 7 in bezug auf den Bohrtisch 4 sowohl eine lineare Radialbewegung vermittels der Flachwälzführung 13 ausführen, als auch eine axiale Drehbewegung und schließlich über die Pinole 6 eine Vertikalbewegung in Richtung des Doppelpfeils Z, wobei die drei Bewegungen vollkommen unabhängig voneinander, gleichzeitig oder auch hintereinander ausführbar sind. Für die Schwenkbewegung des Schwenkzwischenstückes 11 bzw. 30 kann, falls gewünscht, ein Schwenkmotor 14 bzw. 32 vorgesehen werden der im Ausführungsbeispiel im Bereich des Maschinenfusses 3 oder auch am Schwenkzwischenstück selbst untergebracht ist, wobei ein zugehöriger Riemen- oder Zahntrieb das Drehmoment des Motors über eine durch die hohle Maschinensäule 2 hindurchgeführte Welle 17 auf das Zwischenstück 11 überträgt. Die lineare Radialbewegung des Maschinenkopfes 1 entlang der Flachwälzführung 13, läßt sich gleichfalls wahlweise neben einer manuellen Betätigung mittels des Radialmotors 8 automatisieren. Entsprechendes gilt für die alternative Ausbildung der Vorrichtung mit dem Drehgelenk 31, wobei ein zusätzlicher Antrieb 33 beispielsweise über einen Gewindetrieb 34 die erforderliche Schwenkbewegung vorgibt (vgl. Fig. 6 und 7).

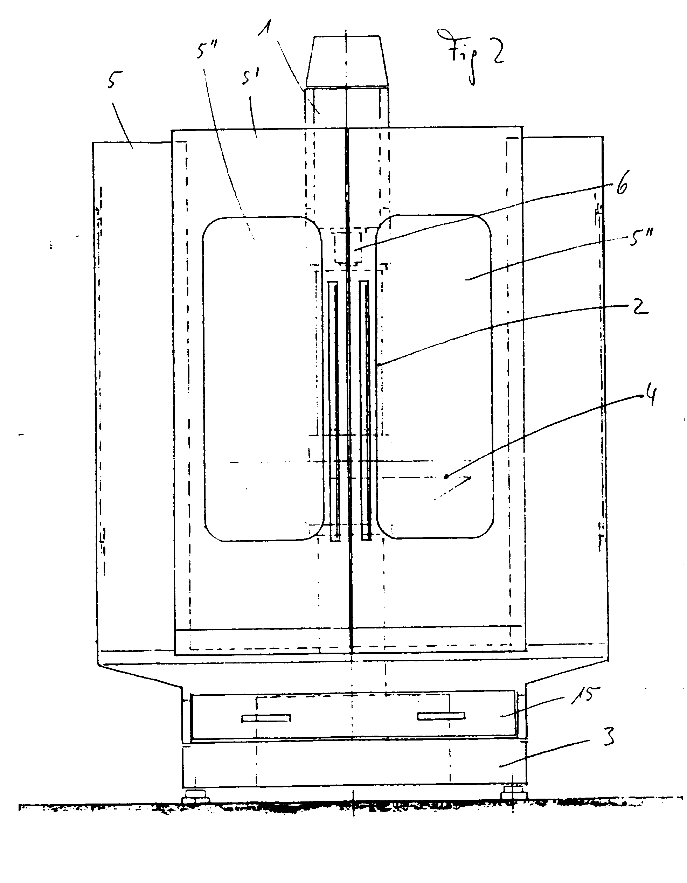

Wie insbesondere aus Fig. 2 in Zusammenhang mit Fig. 1 und 3 ersichtlich, ist der Arbeits- bzw. Betätigungsraum der Säulenbohrmaschine mit einer Verkleidung 5 umschlossen, wobei diese Vollkapselung im vorderen Maschinenbereich vor dem Bohrtisch 4 über eine Doppelschiebetür 5′ zugänglich gemacht ist. Die Verkleidung 5 ist in ihrer Höhe über dem gesamten Höheneinstellbereich des Bohrtisches 4 geführt, und übergreift diesen bis zur Höhe des Maschinenkopfes 1 nach oben wie auch bis zum Maschinenfuß 3 nach unten. Die Verkleidung 5 ist zumindest im vorderen maschinentischseitigen Bereich späne- und kühlmittelableitend verschlossen. Sichtfenster 5″ innerhalb der Schiebetüren 5′ sorgen für eine optimale optische Zugänglichkeit des gesamten Arbeitsraumes. Unterhalb der Verkleidung 5 und oberhalb des Maschinenfusses 3, ist ein Sumpf 15 für die Späne- und Kühlmittelentsorgung vorgesehen, der hier als Spänekasten ausgebildet ist.

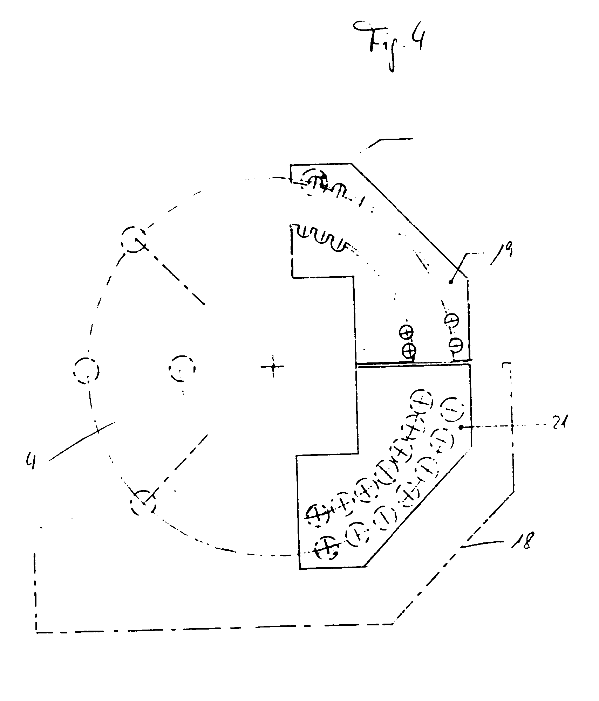

Figuren 3 und 4 zeigen einen Horizontalschnitt durch die gekapselte Säulenbohrmaschine nach Fig. 1 und 2 in zwei unterschiedlichen Ausführungsvarianten und in vereinfachter Darstellung in Höhe des Werkzeugwechslers 10. Hierbei wird besonders deutlich sichtbar, daß sowohl der Bohrtisch 4, als auch das Werkzeugmagazin 19 zusammen mit dem Werkzeugwechsler 10 und gegebenenfalls ein Werkstückmagazin 21 mit zugehörigem Werkstückwechsler radial im dichten Abstand um die Maschinensäule 2 angeordnet sind, so daß sich auch für die Vollkapselung 5 der Maschine eine minimale Querschnittfläche vorgeben läßt. Die vollkapselnde Verkleidung, die im vorderen Maschinenbereich den Bohrtisch 4 übergreifend späne- und kühlmittelableitend ausgebildet ist, setzt sich im hinteren Bereich, also dort wo sich das Werkzeugmagazin befindet, in Form eines Gitterschutzes 18 fort und die Wechslervorrichtungen können an sich bekannte Greiferwechsler sein, wobei wie in Fig. 3 dargestellt das Werkzeugmagazin in Form eines oder mehrerer konzentrisch zueinander liegender Halbringanordnungen ausgebildet sein kann, oder wie in der Ausführungsform nach Fig. 4 in Form mehrerer -hier zweier- Viertelringanordnungen. Das Werkzeugmagazin 19 gemäß Ausbildungsform in Fig. 4, stellt eine solche Viertelringandordnung in zwei konzentrischen Viertelringen dar, während der zweite Viertelring das Werkstückmagazin 21 bildet. In der Ausführungsform nach Fig. 3, kann hingegen die doppelte Halbringanordnung entweder nur ein Werkzeugmagazin 19 vorgeben, oder in der einen Ringanordnung ein Werkzeugmagazin und in der zweiten Ringanordnung ein Werkstückmagazin 21.

Für eine optimierte und wegeminimierte Entnahme der Werkzeuge und/oder Werkstücke ist es wesentlich, daß die Drehbewegung des Maschinenkopfes 1 über mehr als 360° geführt werden kann und im Ausführungsbeispiel bedeutet das, daß der Doppelpfeil X (siehe Fig. 3) einen Schwenkwinkel bis zu 450° ausführen kann.

Sowohl für den Wechselvorgang des oder der Werkstücke als auch der Werkzeuge ist es noch wesentlich, daß hierfür Verriegelungsvorrichtungen 22 vorgesehen sind, die beispielsweise durch Ringwandungen die Anschläge bilden, realisierbar sind. Für derartige Regelungsvorrichtungen ist es besonders vorteilhaft, daß die Drehbewegung des Wechslers gleichzeitig zum Lösen, bzw. zum Spannen des Werkzeuges benützt werden können.

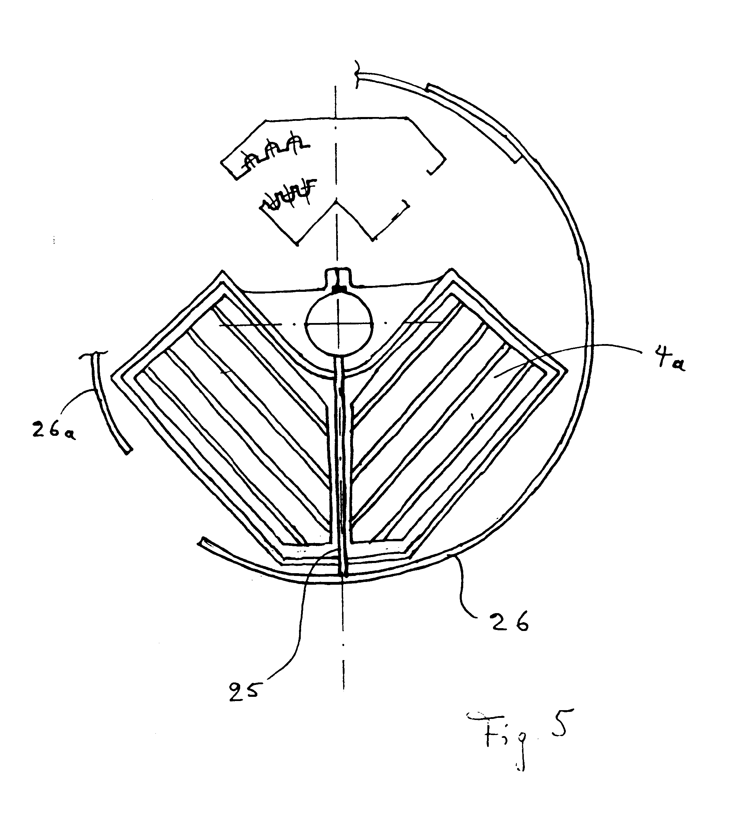

In Fig. 5 ist entsprechend der Schnittdarstellung von Fig. 3 eine solche für ein weiteres Ausführungsbeispiel wiedergegeben. Danach besteht die Rundumverkleidung des Säulenbohrmaschinenaufbaus aus zwei zylindrischen Halbschalen 26a und 26, die in- bzw. gegeneinander beweglich geführt sind, so daß letztlich jeder Bereich des Kompaktaufbaus zugänglich,andererseits aber die Gesamteinrichtung auch vollständig verschließbar ist. Der Bohrtisch 4 ist bei dieser Ausführungsform als Doppeltisch 4a ausgebildet, in der Form, daß die beiden Tische im spitzen Winkel aufeinander stoßen und so eine letztlich von vorn bedienbare Anordnung vorgeben. Zwischen den beiden Tischen 4a ist eine abnehmbare senkrechte Wand 25 angeordnet, die wahlweise ein getrenntes aber auch ein durchgehendes Bearbeiten auf der Doppeltischanordnung ermöglicht.

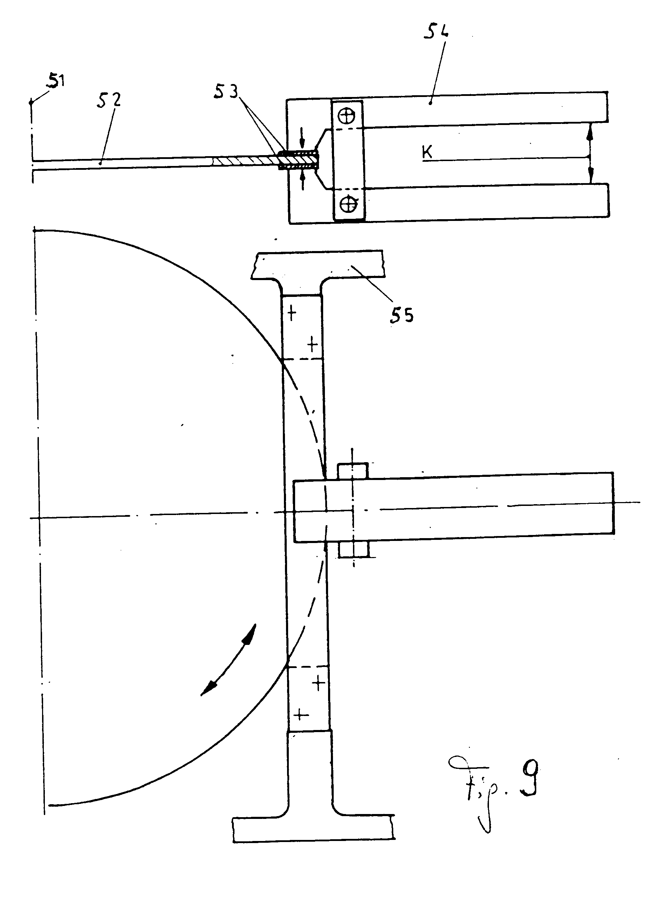

Eine weitere Ausbildungsform eines Doppeltisches ist in Fig. 8 wiedergegeben. Die hier gezeigte Schnittdarstellung entsprechend Fig. 3 und Fig. 5 für eine noch weitere Ausführungsform zeigt eine einteilige Rundumverkleidung 43, die als feststehende Verkleidung ausgebildet ist und,wie dargestellt,im Querschnitt mehr-eckig ist, jedoch auch von rundem oder anderem Querschnitt sein kann. Von vorn gesehen hat die feste Gesamtverkleidung 43 eine Art Fensterausschnitt, der in Arbeitsstellung von einer senkrechten Trennwand 42 verschlossen ist, die ihrerseits senkrecht und mittig auf dem Drehtisch 41 befestigt ist. Die Trennwand 42 trennt den Drehtisch 41 in einen Be- und Entladebereich 40, der in der dargestellten Arbeitsstellung von außen frei zugänglich ist und einen von außen vollständig verschlossenen Arbeitsbereich 46.

Das Werkzeugmagazin 45 ist in der Darstellung nur teilweise angedeutet. Die Werkzeugwechselstellung 44 ist ihrerseits gleichfalls durch die unterbrochene Linienführung angedeutet.

Die in Fig. 8 dargestellte Ausführungsform hat den wesentlichen Vorteil der eindeutigen und sicheren Arbeitsraumabgrenzung, so daß eine eventuelle Unfallgefahr praktisch ausgeschlossen werden kann. Auch sind im Hinblick auf den erforderlichen Steuerungsaufwand sowie die Abgrenzung des Arbeitsraumes in den hinteren Bereich zum Werkzeugwechsler hin, sowie in bezug auf die Kapazität des Werkzeugwechselmagazins, die mögliche Reduzierung des Schwenkwinkels der Achse auf jeweils nur ein Arbeitsfeld bei dieser Ausführungsform besonders vorteilhaft. Die Drehlagerung des Drehtisches 41 erfolgt,wie dargestellt,an einem Säulenausleger 47, wobei die möglichen Bewegungsrichtungen mittels der Doppelpfeile angedeutet sind.

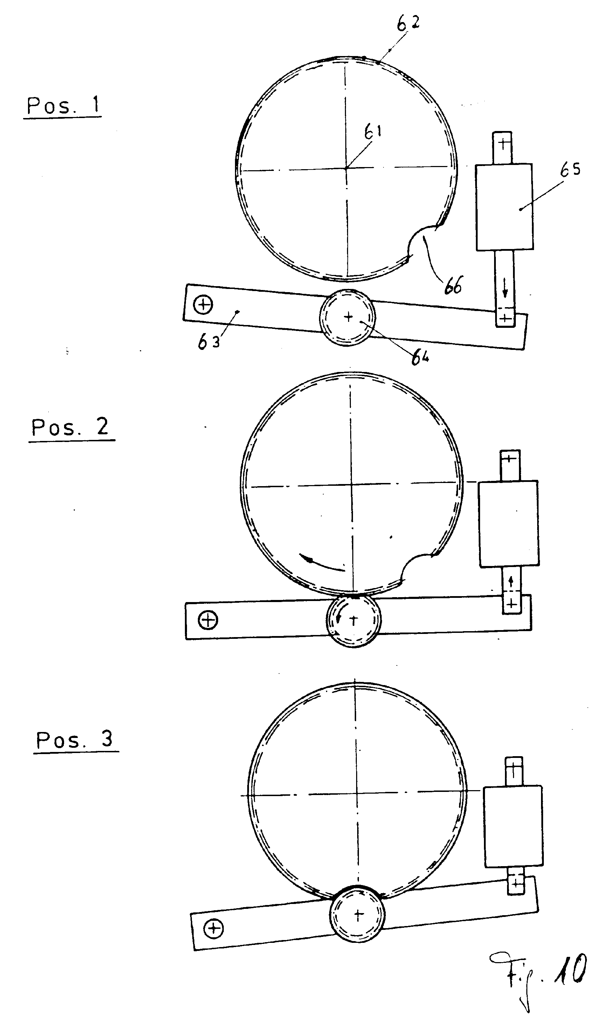

Fig. 9 zeigt eine Vorrichtung zum Klemmen, also Fixieren der Rotationsachse 51, sowohl hinsichtlich einer möglichen Axialbewegung, als auch der möglichen Drehbewegung. Für die Hauptachsen an Werkzeugmaschinen der hier interessierenden Art ist es neben der Verbringung des Werkzeuges oder des Werkstückes an den hierfür jeweils definierten geometrischen Ort von großer Wichtigkeit, die bei der Bearbeitung entstehenden Kräfte möglichst in das Maschinengestell abzuleiten, um jegliche ungewollten Querbelastungen vermeiden zu können. Dabei ist die Steifigkeit der die genannten Kräfte übertragenden Elemente letztlich das entscheidende Maß für die Genauigkeit und Präzision der Arbeitsweise der Maschine. Bei Maschinen, deren Achsen nicht durch einen Lagerkegelkreis oder dergleichen in Position gehalten werden, wird diese Funktion durch eine Achsklemmung übernommen. Aufgrund der erforderlichen Freiheitsgrade einer Klemmzange wäre zur Erreichung der gewünschten Steifigkeit ein hoher Aufwand erforderlich, der mit der dargestellten Anordnung vermieden wird. Gemäß der Anordnung von Fig. 9 werden Federbänder 53 in Anwendung gebracht, die in einem nur sehr geringen Abstand von dem zu klemmenden Element gehalten sind, so daß die zusätzliche Aufbringung nötiger Biegekräfte vernachlässigbar klein ist. Hierfür ist das zu klemmende Element nicht unmittelbar von einer elektrisch,hydraulisch,pneumatisch oder anderweitig betätigbaren Klemmzange 54 gehalten, sondern die Klemmkraft wird mittelbar und zwar für den Fall von Rotationsachsen über Tangentiale und für den Fall einer linearen Achsbewegung durch achsparallele Anordnung der genannten Federbänder 53 vorgegeben und zwar hier für die Klemmscheibe 52. Diese ist ihrerseits in Bewegungsrichtung der Achse steif am Gehäuse 55 befestigt, so daß eine spielfreie Klemmung sichergestellt ist. Die Klemmkraft wirkt in Richtung des Doppelpfeils K bzw. der gegenläufig eingezeichneten Pfeile.

Schließlich ist in Fig. 10 für drei mögliche Positionen (Pos. 1 bis Pos.3) eine Vorrichtung zur Orientierung und Indexsierung der Rotationsachse 61 der Hauptspindel dargestellt. Für den automatischen Werkzeugwechsel ist es im Zusammenhang mit der vorliegenden Einrichtung erforderlich, daß sich die Hauptspindel wegen der erforderlichen Mitnehmerfunktion in einer definierten Winkellage befindet. Hierfür kann entweder ein mechanischer Spindelindex oder ein anderer Lagegeber unter Verwendung eines Lageregelkreises verwendet werden.

Da die Winkellage der Hauptspindel, insbesondere der Verwendung von Asynchronmotoren für diesen Antrieb an sich nicht geregelt ist, ist die erforderliche Spindelstellung für einen automatischen Werkzeugwechsel eindeutig zu definieren, was mit der gezeigten Vorrichtung von Fig. 10 auf einfache Weise erfolgt und zwar durch eine Zusammenfassung der Orientierung und der Indexierung auf die dargestellte Weise. Hierfür ist in das Zahnrad auf der Rotationsachse der Hauptspindel 61 eine Ausnehmung 66 eingebracht, die in Eingriff gelangen kann mit einem Ritzel 64 eines Motors der seinerseits an einer Schwinge 63 befestigt ist, die einseitig anglenkt ist, und deren Schwenkbewegung mittels einer Kolbenzylindereinheit 65 realisiert wird. Der an der radial zur Rotationsachse der Hauptspindel beweglichen Schwinge befestigte Motor mit zugehörigem Ritzel 64 kann hierbei ein elektrisch, ein hydraulisch oder ein pneumatisch betriebener Motor sein. Das Ritzel wird in der dargestellten Weise in ein auf der Hauptspindel befestigtes Zahnrad eingeschwenkt und in diesem Zustand die Hauptspindel so lange gedreht, bis das Ritzel in einer am Zahnrad befindlichen Ausnehmung 66 in Eingriff kommt, die die Indexstellung der Hauptspindel darstellt. In Position 1 ist die ausgeschwenkte Schwinge gezeigt, so daß sich die Hauptspindel frei drehen kann. In Position 2 ist die eingeschwenkte Schwinge gezeigt, bei der also das genannte Zahnrad mit dem Ritzel zur Orientierung in Eingriff steht und in Position 3 ist schließlich die Indexstellung durch Ineingriffbringung des Ritzels mit der Ausnehmung wiedergegeben.

## Patentansprüche

1. Säulebohrmaschinengestütztes Bohrzentrum, bestehend aus einem Maschinenkopf (1), der das Schaltgetriebe mit stufenlosem Riemenstelltrieb und Hauptantriebsmotor, die Pinole (6) mit der Bohrspindel und einem Vorschubantrieb für die Pinole aufnimmt, bestehend weiterhin aus einer Maschinensäule (2), die einen entlang dieser mittels einer Zahnstange (16) höhenverstellbaren Tisch (4) trägt, sowie aus einem Maschinensäule (2) abstützenden Maschinenfuß (3), wobei an der Maschinensäule (2) ein als Führungsschlitten ausgebildetes Schwenkzwischenstück drehbar montiert ist und auf das Schwenkzwischenstück (11) der Maschinenkopf (1) gleitend montiert ist,
dadurch **gekennzeichnet,**
daß das Schwenkzwischenstück (11) am oberen stirnseitigen Ende der Maschinensäule (2) drehgelagert montiert ist, daß in radialer Anordnung im Bereich der vom Maschinenkopf (1) überstrichen wird zusätzlich zu wenigstens einem im vorgegebenen Rastermaß höhenverstellbaren Bohrtisch (4) zumindest ein Werkzeugwechsler (10) mit als Anschlag ausgebildeter Ent- und Verriegelungsvorrichtung (22) vorhanden ist und daß die vordere Maschinentischseite des Säulenbohrmaschinengestützten Bohrzentrums zwischen Maschinenständer (3) und Maschinenkopf (1) späne- und kühlmittelableitend ausgebildet ist.

2. Vorrichtung nach Anspruch 1, dadurch gekennzeichnet, daß die Rückseite im Bereich des Werkzeugwechslers (10) mit Magazin (19) einen Gitterschutz (18) aufweist.

EP 0 331 178 B1

3. Vorrichtung nach Anspruch 1 und 2, dadurch gekennzeichnet, daß zusätzlich zu dem Werkzeugwechsler (10) ein Werkstückwechsler mit zugehörigem Werkstückmagazin (21) vorgesehen ist.

4. Vorrichtung nach wenigstens einem der Ansprüche 1 bis 3, dadurch gekennzeichnet, daß die Vorderverkleidung zusammen mit dem Gitterschutz eine Vollschutzverkleidung für die Maschine bildet.

5. Vorrichtung nach wenigstens einem der Ansprüche 1 bis 4, dadurch gekennzeichnet, daß unterhalb des Werkzeugwechslers (10) ein Schrank (12) für die Aufnahme der Hydraulik, Elektrik und/oder Elektronik rückseitig an der Maschine angebracht ist.

6. Vorrichtung nach einem der Ansprüche 1 bis 3, dadurch gekennzeichnet, daß der Bohrtisch als Doppeltisch (4a) ausgebildet ist, und daß zwischen den Tischhälften eine abnehmbare Wand (25) angeordnet ist.

7. Vorrichtung nach wenigstens einem der Ansprüche 1 bis 6, dadurch gekennzeichnet, daß die Gesamtverkleidung (26) von rundem Querschnitt ist und aus zwei Teilen besteht, die in- bzw. gegeneinander beweglich sind.

8. Säulenbohrmaschinengestütztes Bohrzentrum, bestehend aus einem Maschinenkopf, der das Schaltgetriebe mit stufenlosem Riemenstelltrieb und Hauptantriebsmotor, die Pinole mit der Bohrspindel und einen Vorschubantrieb für die Pinole aufnimmt, bestehend weiterhin aus einer Maschinensäule, die einen entlang dieser mittels einer Zahnstange höhenverstellbaren Tisch trägt, sowie aus einem die Maschinensäule abstützenden Maschinenfuß,
dadurch **gekennzeichnet,**
daß auf dem oberen stirnseitigen Ende der Maschinensäule (2) ein Schwenkzwischenarm (30) drehgelagert montiert ist, und daß an dem anderen Ende dieses Schwenkzwischenarmes der Maschinenkopf (1) über eine Drehlagerung schwenkbar montiert ist.

9. Vorrichtung nach Anspruch 6, dadurch gekennzeichnet, daß die Drehlagerung des Maschinenkopfes (1) mittels eines gabelförmigen Gelenks (31) vorgenommen ist.

10. Vorrichtung nach wenigstens einem der Ansprüche 1 bis 9, dadurch gekennzeichnet, daß die Funktionsabläufe der Maschine NC-gesteuert sind.

11. Vorrichtung nach einem der Ansprüche 1 bis 3, dadurch gekennzeichnet, daß der Bohrtisch (4) als Drehtisch (41) ausgebildet an einem Säulenausleger drehgelagert ist, und daß eine mittig auf dem Drehtisch (41) senkrecht zur Arbeitsfläche verlaufende Trennwand (42) gemeinsam mit einer festen Gesamtverkleidung der Säulenbohrmaschine wechselseitig einen unzugänglichen Arbeitsbereich (46) und einen zugänglichen Be- und Entladebereich (40) voneinander trennen.

12. Vorrichtung nach wenigstens einem der vorangegangenen Ansprüche, dadurch gekennzeichnet, daß die Axial- und/oder Drehbewegung der Rotationsachse (51) mittels einer Klemmvorrichtung arretierbar ist, wobei die erforderliche Klemmkraft mittelbar über Federbänder (53) aufbringbar ist, die ihrerseits fest am Gehäuse befestigt sind und mit einer Klemmzange (54) in Eingriff bringbar sind.

13. Vorrichtung nach wenigstens einem der vorangegangenen Ansprüche, dadurch gekennzeichnet, daß eine Vorrichtung zur Orientierung und Indexierung der Hauptspindel für den automatischen Werkzeugwechsel vorgesehen ist, wobei ein an einer radial zur Rotationsachse der Hauptspindel (61) beweglichen Schwinge (63) befindlicher Motor mit Ritzel (64) in ein auf der Hauptspindel (61) befindliches Zahnrad (62) einschwenkbar ist und in diesem Zustand die Hauptspindel (61) so lange drehbar ist, bis das Ritzel (64) in eine am Zahnrad (62) befindliche Ausnehmung (66) einschwenkt, die die Indexstellung der Hauptspindel (61) definiert.

## Claims

1. Drilling centre based on a column drilling machine and comprising a machine head (1), which receives the change-over gear with a continuous belt-adjusting drive and the main driving motor, the sleeve (6) with the drilling spindle and an advance drive for said sleeve, as well as furthermore including a machine column (2), carrying a bench (4) adjustable up and down the same by means of a rack (16), and a machine stand (3) supporting said machine column (2), a pivoting intermediate piece (11), designed as slide carriage, being rotatably mounted to the machine column (2) and said machine head (1) being slidably mounted onto said pivoting intermediate piece (11),
**characterised** in that
said pivoting intermediate piece (11) is journalled at the upper face end of the machine column (2); that, in the region which is swept by the machine head (1), at least one radially arranged tool changer (10) in addition to at least one drilling bench (4), vertically adjustable in the given modular dimension, and having an unlocking and locking device (22) designed as stop is provided, and that the face of the platen of said drilling centre based on a column drilling machine between the machine post (3) and the machine head (1) is designed so as to be chip- and coolant-diverting.

7

2. Apparatus according to Claim 1, characterised in that the back side, in the range of the tool changer (10) with the magazine (19), shows a grid-type protection (18).

3. Apparatus according to Claims 1 and 2, characterised in that, in addition to said tool changer (10), a workpiece changer with the appertaining workpiece magazine (21) is provided.

4. Apparatus according to at least one of Claims 1 to 3, characterised in that the front covering, together with said grid-type protection, constitutes a full protective covering for the machine.

5. Apparatus according to at least one of Claims 1 to 4, characterised in that, underneath the tool changer (10), a cabinet (12) for receiving the hydraulic, the electric and/or the electronic is attached to the back side of the machine.

6. Apparatus according to any one of Claims 1 to 3, characterised in that the drilling bench is designed as double bench (4a) and that a removable wall (25) is disposed between the bench halves.

7. Apparatus according to at least one of Claims 1 to 6, characterised in that the overall covering (26) is of round cross-section and consists of two elements that can be moved into resp. towards each other.

8. Drilling centre based on a column drilling machine and comprising a machine head, which receives the change-over gear with a continuous belt-adjusting drive and the main driving motor, the sleeve with the drilling spindle and an advance drive for said sleeve, as well as furthermore including a machine column, carrying a bench adjustable up and down the same by means of a rack, and a machine stand supporting said machine column,

**characterised** in that, on the upper face end of the machine column (2), a pivoting intermediate arm (30) is journalled and that, at the other end of said pivoting intermediate arm, the machine head (1) is pivotally mounted through a journal bearing.

9. Apparatus according to Claim 6, characterised in that journalling of said machine head (1) is effected by means of a joint (31) in the form of a fork.

10. Apparatus according to at least one of Claims 1 to 9, characterised in that the operating sequences of the machine are numerically controlled.

11. Apparatus according to any one of Claims 1 to 3, characterised in that the drilling bench (4), designed as rotary bench (41), is rotatably supported on a column bracket and that a partition wall (42) in the middle of the rotary bench (41) and perpendicular to the working surface, in co-operation with a solid overall covering of said column drilling machine, separates an inaccessible working area (46) and an accessible loading and unloading area (40) from each other in alternate manner.

12. Apparatus according to at least one of the preceding claims, characterised in that the axial and/or rotary motion of the rotational axle (51) can be arrested by means of a clamping device, the required clamping force being applicable through spring bands (53) in indirect manner which, in their turn, are fixedly secured to the casing and which can be brought into engagement with a pair of clamping pliers (54).

13. Apparatus according to at least one of the preceding claims, characterised in that a device for orienting and indexing the main spindle is provided for automatic tool change, a motor, located at a link (63) radially movable with respect to the axis of rotation of said main spindle (61), with a pinion (64) being retractable into a gear (62) located on said main spindle (61) and that, in this condition, the main spindle (61) can be rotated till the pinion (64) retracts into a recess (66) located on the gear (62) and defining the index position of said main spindle (61).

**Revendications**

1. Centre de perçage à perceuse à colonne, se composant d'une tête de machine (1) renfermant l'entraînement par une transmission à courroie à réglage continu et le moteur de commande principal la douille de la broche (6) de perçage et une commande d'avance pour la douille de la broche, et comportant en outre une colonne (2) qui porte une table (4) réglable en hauteur le long de celle-ci au moyen d'une crémaillère (16), ainsi qu'un socle (3) qui soutient la colonne (2), un élément intermédiaire (11) conçu comme un chariot de guidage monté pivotant sur la colonne (2) tandis que la tête de machine (1) est montée coulisante sur l'élément intermédiaire pivotant (11),

**caractérisé** en ce que

l'élément intermédiaire pivotant (11) est monté à pivotement à l'extrémité supérieure avant de la colonne (2), en ce qu'il est prévu en une disposition radiale dans la zone ouverte par la tête de machine (1), en plus de la table de perçage (4) à déplacement vertical prédéterminé, au moins un changeur d'outils (10) avec un dispositif de déverrouillage et de verrouillage (22) conçu sous forme de butée, et en ce que la face avant de la table entre le socle (3) et la tête de machine (1) est conçue pour l'évacuation des copeaux et de l'agent de refroidissement.

2. Dispositif selon la revendication 1, caractérisé en ce que le côté arrière présente, dans la zone du changeur d'outils (10) avec magasin (19) une grille de protection (18).

3. Dispositif selon les revendications 1 et 2, caractérisé en ce qu'en plus du changeur d'outils (10), il est prévu un changeur de piéces à usiner avec un magasin (21) correspondant pour ces pièces.

4. Dispositif selon au moins l'une quelconque des revendications 1 à 3, caractérisé en ce que le capotage frontal constitue en association avec la grille de protection un habillage de protection complet pour la machine.

5. Dispositif selon au moins l'une quelconque des revendications 1 à 4, caractérisé en ce qu'une armoire (2) est placée sous le changeur d'outils (10), sur le côté arrière de la machine, pour recevoir les commandes hydrauliques, électriques et/ou électroniques.

6. Dispositif selon l'une quelconque des revendications 1 à 3, caractérisé en ce que la table de perçage est conçue sous forme d'une double table (4a) et en ce qu'une paroi amovible (25) est placée entre les moitiés de table.

7. Dispositif selon au moins l'une quelconque des revendications 1 à 6, **caractérisé** en ce que l'ensemble de l'habillage (26) est de section circulaire et en ce qu'il se compose de deux parties, qui sont mobiles l'une par rapport à l'autre.

8. Centre de perçage à perceuse à colonne, se composant d'une tête de machine renfermant l'entrainement par une transmission à courroie à réglage continu et le moteur de commande principal, la douille de'la broche de perçage et une commande d'avance pour la douille de la broche, et comportant en outre une colonne qui porte une table réglable en hauteur le long de celle-ci au moyen d'une crémaillère, ainsi qu'un socle qui soutient la colonne,

**caractérisé** en ce
qu'un bras intermédiaire pivotant (30) est monté tournant sur l'extrémité supérieure avant de la colonne (2), et en ce que le tête de machine (1) est montée pivotante par l'intermédiaire d'un palier de pivotement, à l'autre extrémité de ce bras intermédiaire tournant.

9. Dispositif selon la revendication 6, caractérisé en ce que le palier de pivotement de la tête de machine (1) est réalisé au moyen d'une articulation (31) du type chape.

10. Dispositif selon au moins l'une quelconque des revendications 1 à 9, caractérisée en ce que le fonctionnement de la machine est à commande numérique.

11. Dispositif selon l'une quelconque des revendications 1 à 3, caractérisé en ce que la table de perçage (4) est réalisée sous la forme d'une table tournante (41) et en ce qu'elle est montée de manière à tourner sur une console de la colonne, et en ce qu'une paroi de séparation (42) située au centre de la table tournante (41) perpendiculairement à la surface de travail, et associée à un capotage fixe complet de la perceuse à colonne séparent réciproquement l'une de l'autre une zone de travail (46) inaccessible et une zone de chargement et de déchargement (40) accessible.

12. Dispositif selon au moins l'une quelconque des revendications précédentes, caractérisé en ce que le mouvement axial et/ou rotatif de l'axe de rotation (51) peut être arrêté au moyen d'un dispositif de serrage, l'effort de serrage nécessaire pouvant être appliqué indirectement par l'intermédiaire de colliers élastiques (53), qui sont de leur coté solidement fixés sur le bâti et qui peuvent être amenés en prise avec une pince étau (54).

13. Dispositif selon au moins l'une quelconque des revendications précédentes, caractérisé en ce qu'il est prévu un dispositif pour l'orientation et l'indexage de la broche principale pour le changement automatique d'outils, dispositif comportant un moteur avec pignon (64) situé sur un bras oscillant (63) mobile radialement par rapport à l'axe de rotation de la broche principale (61), le pignon pouvant basculer pour engrener avec une roue dentée (62) située sur la broche principale (61) et, dans cet état, la broche principale (61) peut tourner jusqu'à ce que le pignon (64) pénètre dans un évidement (66) situé sur la'roue dentée (62), pour définir la position de référence de la broche principale (61).

Fig. 1

Fig 2

Fig. 3

*Fig. 4*

Fig. 5

4a

26a

26

25

Fig. 6

Fig. 7

Fig. 8

51

52

53

54

K

55

Fig. 9

Pos. 1

Pos. 2

Pos. 3

Fig. 10